# EUROPEAN PATENT SPECIFICATION

(11) **EP 0 651 209 B1**
(45) Date of publication and mention of the grant of the patent: **23.05.2001**
(21) Application number: 94307907.9
(22) Date of filing: 27.10.1994
(51) Int. Cl.: F24F 11/00, G05D 23/19

(54) **Control for HVAC sytems**
Steuerung für Klimaanlagen
Commande pour systèmes de climatisation

(30) Priority: 29.10.1993 US 143029
(43) Date of publication of application: 03.05.1995
(73) Proprietor: CARRIER CORPORATION, Syracuse New York 13221 (US)
(72) Inventor: Friday, Arthur Franklin, Jr., Liverpool, New York 13090 (US); Chan, Chi-Ping, Liverpool, New York 13090-2544 (US); Desmarais, Brett Alexander, Cicero, New York 13039 (US)
(74) Representative: Tomlinson, Kerry John

(56) References cited:
- GB-A- 2 258 743
- US-A- 4 674 291

## Description

This invention relates to the programmed control of heating and cooling systems utilizing one or more programmed microprocessors. In particular, this invention relates to the manner in which the programmed control in the microprocessors interfaces with various elements in the heating and cooling systems.

Programmed control of heating and cooling systems using microprocessors is well known. The programmed control normally includes stored instructions which either send or await the receipt of communications from various elements in the heating and cooling systems. These elements include temperature sensors, control valves, as well as fan and compressor motors. In each instance, an input or output (I/O) channel associated with the microprocessor is specifically identified in the software for use in communicating with a particular element. When communication is to take place, the element either receives an output signal or transmits an input signal over the designated I/O channel. The programmed control within the microprocessor proceeds on the assumption that all control functions are being properly executed by the elements.

The above described program control can pose problems when making any changes to the software residing in the microprocessor. In this regard, one must maintain an accurate accounting at all times of the I/O channel assignments to the elements when making any changes or revisions to the software.

One must also be careful when attempting to use the program control for what is believed to be a similar heating and cooling system having a similar configuration of elements. In this regard any differences in the elements in the second system must be carefully noted in the instructions for these particular elements.

US-A-4674291 discloses a control apparatus for an air conditioning or a refrigerating apparatus having an input/output interface between the control apparatus and various loads of the air conditioning or the refrigerating apparatus.

It is an object of the invention to provide a programmable control for a heating or cooling system wherein changes may be easily made to the software affecting one or more elements in the system.

It is another object of the invention to provide a programmable control for a general configuration of hardware elements in a heating or cooling system that may be easily adapted to a number of different versions of the system.

The above and other objects are achieved by providing a method for controlling a heating or cooling system having a programmable control unit interfacing with a set of discrete elements that implement the prescribed heating or cooling for the system, characterised in that the programmable control unit carries out the steps of:
controlling the heating or cooling to be performed by the heating or cooling system through a set of control variables corresponding to a given set of discrete elements;
accessing configuration data defining the relationships between the set of control variables and the discrete elements of the heating or cooling system when communication is to occur between the programmable control unit and the discrete elements of the heating or cooling system.

Thus, a programmed control for a heating or cooling system wherein the control software can be completely designed without regard to performing actual communications with hardware elements is provided. This is achieved by providing software channel assignments to the software variables in the programmed control that may have communication relationships with hardware elements. The actual assignment of the software variables to hardware elements is done separately by system configuration software which maps the software channel assignments to identified hardware I/O channels. This configuration software is invoked only at such times as the software executing in the microprocessor has a need to perform a communication with a hardware element. The configuration software is preferably invoked on an interrupt basis or at the end of a pass through execution of the control software. In either event the configuration software proceeds to receive communications on I/O channels from the hardware elements and matches these communications with software variables having software channels that have been mapped to the hardware I/O channels. The configuration software may alternatively transmit communications over I/O channels to various hardware elements by noting which hardware I/O channels correspond with a software channel associated with a given software variable.

In accordance with the invention, the mapping of software channels to the hardware channels can be changed at anytime. Changes can occur either as a result of tailoring the software to a different configuration of hardware elements or as a result of adding capabilities to an existing configuration of hardware elements.

The above mentioned objects are also achieved with a programmable control unit as claimed in claim 7.

Other objects and advantages of the present invention will be apparent from the following description, given by way of example only, in conjunction with the accompanying drawings, in which:
Figure 1 illustrates a plurality of individually controlled chiller units each having a plurality of compressor stages and fan units operating under the control of respective control units;
Figure 2 illustrates a microprocessor configuration for one of the control units of Figure 1;
Figures 3A - 3C illustrate configuration data for each of the control units of Figure 1; and
Figure 4 illustrates a configuration program executed by each microprocessor within a control unit of Figure 1.

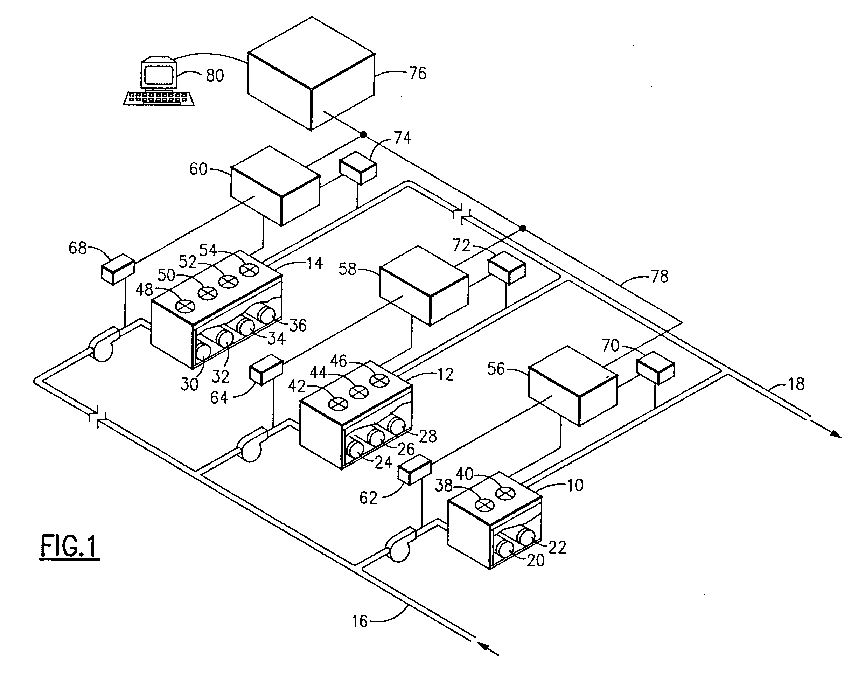

Referring to Figure 1, a number of parallel chiller units 10, 12, and 14 are illustrated relative to a coolant return line 16 and a coolant supply line 18. The coolant circulates through a series of heat exchangers (not shown) which effectively cool one or more spaces. The coolant returns to the system via the coolant return line. The coolant will hereinafter be referred to as chilled water although it should be understood that the system would work equally well with other coolants. The chiller units 10, 12, and 14 are typically required to maintain the leaving coolant at the same temperature.

Each of the chiller units is seen to include individual compressor stages such as 20 and 22 for chiller unit 10; 24, 26 and 28 for chiller unit 12; and 30, 32, 34 and 36 for chiller unit 14. Each of the chiller units also includes fans such as 38 and 40 for chiller unit 10; 42, 44, and 46 for chiller unit 12; and 48, 50, 52 and 54 for chiller unit 14. The compressor stages and fans in each respective chiller unit are individually controlled by a unit controller such as 56 for chiller unit 10, 58 for chiller unit 12, and 60 for chiller unit 14. Each unit controller receives an entering water temperature from a respective entering water temperature sensor 62, 64, or 68. Each unit controller also receives a leaving water temperature from a respective leaving water temperature sensor 70, 72 or 74. It is to be understood that each unit controller activates the number of compressor stages within the chiller unit so as to achieve a desired leaving water temperature for its respective branch of the system of Figure 1. This local control may be in accordance with any number of well known control methods for activating or deactivating compressors and associated fans in order to achieve the desired leaving water temperature. In addition to controlling the respective chiller unit, each unit controller communicates with a system controller 76 via a communication bus 78.

The system controller 76 downloads control programs into the respective unit controllers 56, 58, and 60 via the communication bus 78. These control programs each contain the same algorithms for the control of the fans and compressors in each chiller unit. The downloaded control programs are configured for each chiller unit by separately loaded configuration data for each unit controller. As will be explained in detail hereinafter, the separately loaded configuration data defines relationships between the software variables in the control program common to each unit controller and the actual hardware elements that are to be controlled in each chiller unit. This allows the common control program in each unit controller to execute without regard to the actual number of fans and compressors in each chiller unit. It is to be noted that the downloading of the various software modules to the individual unit controllers can be done in response to commands from a user interface 80 associated with the system controller 76.

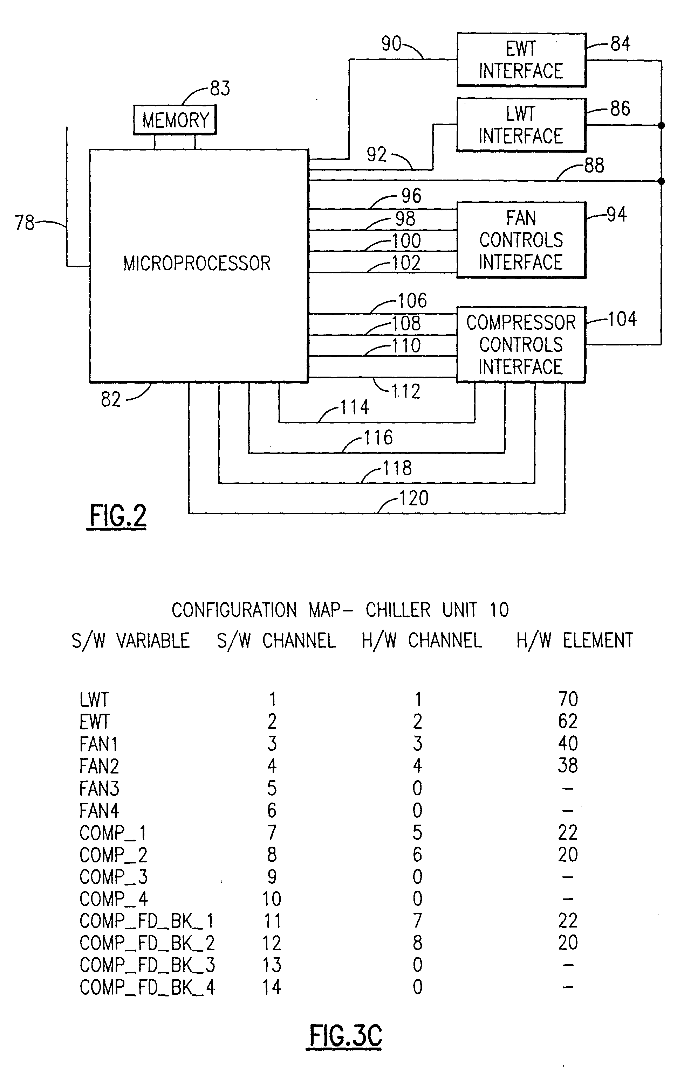

Figure 2 illustrates a unit controller in further detail. Each unit controller includes a programmed microprocessor 82 which receives the downloaded software from the system controller 76 via the communication bus 78. The downloaded software is stored in a memory 83 for execution by the microprocessor. The microprocessor 82 furthermore communicates with various digital to analog interfaces illustrated in Figure 2. In particular, the microprocessor 82 receives temperature information from either an entering water temperature interface 84 or a leaving water temperature interface 86. It is to be appreciated that each interface is connected to a leaving water temperature sensor or an entering water temperatures sensor for the particular control unit. Each interface is operative to produce an interrupt signal over an interrupt communication line 88 when a temperature update is to be provided to the microprocessor 82. The microprocessor is operative to read the temperature value via a hardware input line 90 or 92.

The microprocessor is also connected to a fan control interface 94. The fan control interface 94 receives output signals from the microprocessor over the lines 96, 98, 100, and 102 which activate respective fans in a chiller unit through the fan control interface 94. The microprocessor also is interconnected to a compressor control interface 104 via a set of output lines 106, 108, 110 and 112 as well as a set of feedback lines 114, 116, 118 and 120. The compressor control interface 104 is operative to send an interrupt signal over the line 88 to the microprocessor 82 in the event that a feedback to the microprocessor 82 is in order. The compressor control interface will otherwise receive output signals from the microprocessor 82 via the lines 106 through 112.

It is to be appreciated that each of the interfaces 84, 86, 94 and 104 are directly connected to the corresponding hardware elements in Figure 1. As has been previously noted, the number of hardware elements to which the unit controller connects will vary depending on the chiller. In this regard, both chiller units 10 and 12 have less fans and less compressors than chiller unit 14. This will mean less active connections to fans and compressors by the fan control interface 94 and the compressor control interface 104 in the unit controllers 56 and 58 for chiller units 10 and 12 versus the unit controller 60 for the chiller unit 14.

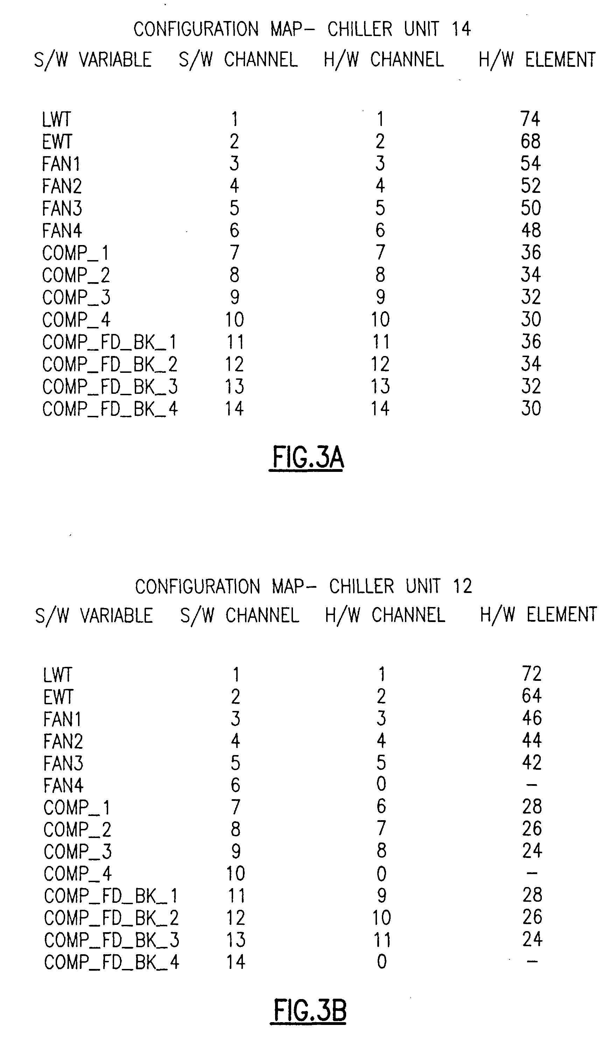

Notwithstanding the number of active connections to individual fans and compressors, each unit controller will preferably include the same type of microprocessor having the same control program stored in its memory. The control program will have a complete set of software variables that govern the control of the maximum number of temperature sensors, fans and compressors. In order for the control program to control various numbers of sensors, fans and compressors, configuration data is provided by the system controller 76 to the microprocessor 82. This configuration data is stored for use in the local memory 83. Referring to Figure 3A, the configuration data for the chiller unit 14 is illustrated in detail. The configuration data is seen to include a column of software variables which includes leaving water temperature LWT, entering water temperature EWT, fan software controls variables labeled FAN1 to FAN4, compressor control variables COMP_1 through COMP_4 and COMP_FD_BK_1 through COMP_FD_BK_4. Each of the software variables is denoted by a particular software channel index number. Each software channel index number is in turn related to a hardware channel index number. The hardware channels correspond to the various connecting lines to the various interfaces 84, 86, 94 and 104 in Figure 2 which in turn connect to specific hardware elements such as is shown in Figure 3A. For example, hardware channel one for the leaving water temperature sensor 74 is line 92 in Figure 2. This hardware channel is mapped to the software channel one denoting the software variable LWT. In similar fashion, the compressor control 36 has input lines 106 - 112 corresponding to the hardware channel lines seven through ten that are mapped to the software channels seven through ten identifying the compressor variables COMP_1 through COMP_4.

Referring to Figure 3B, the configuration data for the chiller unit 12 is illustrated in detail. It will be remembered that the chiller unit 12 does not contain a fourth fan or a fourth compressor. The hardware channel index assignments for the fourth fan control variable FAN4, and the compressor variables COMP_4 and COMP_FD_BK4, are all numerically coded with a value of zero. Furthermore, beginning with the software variable COMP_1, the numerical value of the hardware channel index assignment does not directly correspond with the numerical value of the software channel index assignment. This means that the software channel index numbers will map to different hardware channel index numbers from this point.

Referring to Figure 3C, the configuration data for the chiller unit 10 even further departs from a direct correspondence between the numerical value of the hardware channel index and that of the software channel index. In particular, since the chiller unit 10 has only two fan controls and two compressors, the hardware channel indexes for the third and fourth fans as well as the third and fourth compressors are all equal to zero. It is hence to be appreciated that the control program executing in the unit controller 56 associated with the chiller unit 10 will have significantly less non-zero hardware channel indexes than the unit controllers 58 and 60.

As has been previously noted, the configuration data for each respective chiller unit is loaded into the memory 83 associated with the microprocessor 82 of the corresponding unit controller. The configuration data is preferably organized in two ways in memory. First, storage locations are set aside for each software channel index along with the value for the particular software variable represented by the software channel index and the corresponding hardware channel index number. Secondly, storage locations are set aside for each hardware channel index along with the current values that have been either communicated to or received from the appropriate analog to digital interfaces for that hardware channel index. The software channel index number is also stored in a storage location linked to the hardware channel index number. In this manner, a search query can be made by either set of index numbers to find the appropriate configuration data.

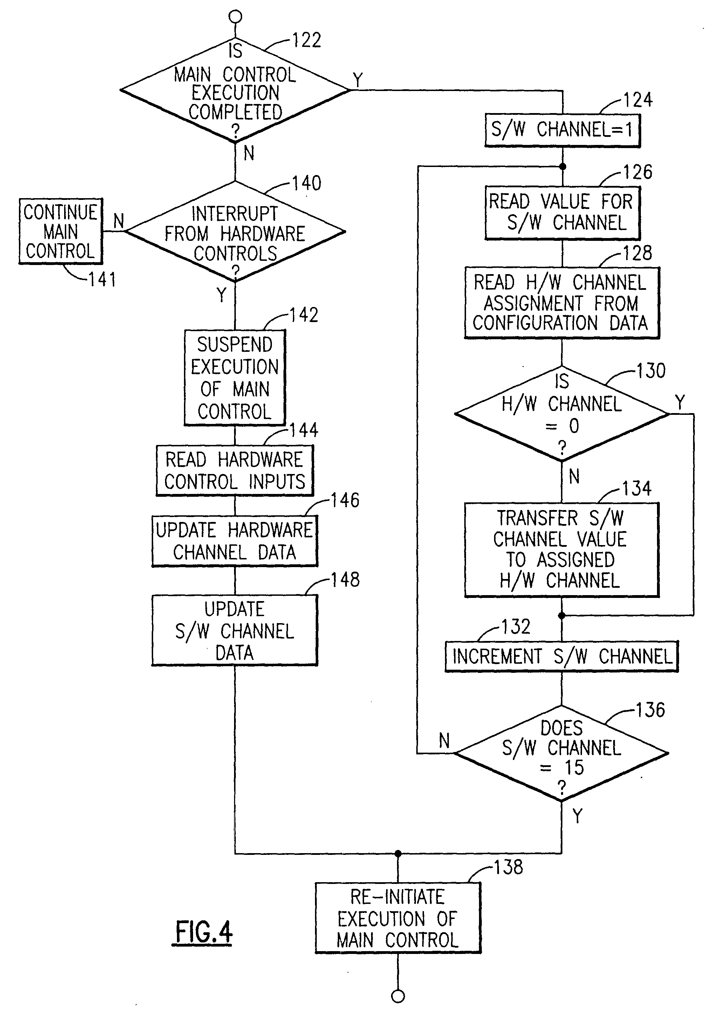

Referring to Figure 4, a program utilizing the stored configuration data is illustrated in detail. This program begins with a step 122 wherein the question is asked as to whether the control program execution is complete. It is to be appreciated that the control program will normally cause the microprocessor to calculate various values of the software control variables during execution. Completion of these calculations will result in the microprocessor exiting from the step 122 to a step 124 and setting a software channel index equal to one. The value of the software variable corresponding to this software channel index is read in a step 126. The hardware channel index assignment for the software channel index is next read in a step 128. The thus read hardware channel index is checked for being equal to zero in step 130. In the event that the hardware channel assignment is equal to zero, the microprocessor proceeds from step 130 to a step 132 and increments the software channel index by one. In the event that the hardware channel index is not equal to zero, the microprocessor proceeds to a step 134 and transfers the software channel value read in step 126 to a storage location in memory 83 associated with the assigned hardware channel identified in step 128. The software channel is thereafter incremented in step 132. The thus incremented software channel index is checked for being equal to fifteen in a step 136. It is to be appreciated that the value for each software channel index will be successively read and transferred to a storage location in memory 83 associated with the assigned hardware channel index. This will continue until the software channel index is incremented from fourteen to fifteen in step 132. When this occurs, the microprocessor will proceed out of step 136 to a step 138 and reinitiate execution of the control program for the particular chiller unit. At this time, the control program will again calculate any values for the software variables associated with the various software channel indexes. At the same time, each of the interfaces 84, 86, 94 and 104 will have access to the updated hardware channel values stored in the memory 83 for use by the respective hardware elements.

Referring to Figure 2, it will be remembered that an interface may generate an interrupt signal on the line 88 when it wishes to communicate with the microprocessor 82. This may occur at anytime during execution of the control program.

Referring to Figure 4, the status of line 88 is continuously monitored during control program execution by a step 140. When no interrupt is noted, the microprocessor simply continues to execute the control program as noted in step 141. When an interrupt is received from one of the interfaces, the microprocessor will proceed to a step 142 and suspend execution of the control program. Suspension of the control program is done in a manner which allows the control program to complete execution of any particular series of steps that are necessary before termination. This would include for instance performing a complete calculation of the value of a particular software variable and storing the results thereof before terminating control. When the control program has signaled that it has completed its termination procedure, the microprocessor will proceed to a step 144 and read the hardware control input signal lines. These would be the signal lines associated with the leaving water temperature sensor, entering water temperature sensor, and the feedback signals from the individual compressors within the given chiller unit. For instance, the feedback signal for compressor number one in chiller unit 14 would be stored in a storage location associated with the hardware channel index eleven whereas the same first compressor feedback signal value would be stored in a storage location associated with hardware channel index nine for chiller unit 12 and in a storage location associated with hardware channel index seven for chiller unit 10. Following the updating of all hardware channel input data, the microprocessor will proceed to a step 146 and update all corresponding software channel data. This will involve reading the value stored under the hardware channel index and storing that value under the corresponding software channel index. Following the updating of all corresponding software channel input data, the microprocessor will proceed to step 138 and again reinitiate execution of the control program. Execution within the control program will normally begin at the point where the control was previously interrupted. The control of each chiller unit will be dictated by the same control program. The control program will in each instance either use presently stored software channel values or calculate new software channel values as dictated by the control program. While this is occurring, the interfaces 84, 86, 94, and 104 shown in Figure 2 for a given microprocessor will have the benefit of the values currently stored under the appropriate hardware channel indexes.

It is to be appreciated that the configuration data and configuration program used for the unit controllers 56, 58 and 60 of Figure 1 could also be used in any particular control system environment wherein a generally written control program is to be used for the control of a number of different HVAC systems. In this regard, a control program may be written for a series of different HVAC systems and loaded into the controller for any of these HVAC systems along with configuration data defining the particular relationship between the software elements of the control program and the hardware elements of the system. Communications between the hardware elements and the software elements would be facilitated by software similar to that illustrated in Figure 4.

It is to be appreciated that a particular embodiment of the invention has been described. Alterations, modifications, and improvements thereto will readily occur to those skilled in the art. Accordingly the foregoing description is by way of example only. The invention is limited only as defined in the following claims.

## Claims

1. A method for controlling a heating or cooling system having a programmable control unit (56,58,60) interfacing with a set of discrete elements (20-54, 62-74) that implement the prescribed heating or cooling for the system, characterised in that the programmable control unit (56,58,60) carries out the steps of:
controlling the heating or cooling to be performed by the heating or cooling system through a set of control variables corresponding to a given set of discrete elements (20-54, 62-74);
accessing configuration data defining the relationships between the set of control variables and the discrete elements (20-54, 62-74) of the heating or cooling system when communication is to occur between the programmable control unit (56,58,60) and the discrete elements (20-54, 62-74) of the heating or cooling system.

2. A method of controlling a system having a plurality of individual heating or cooling units (10,12,14) each controlled by the method of claim 1.

3. The method of claim 1 or 2, wherein the configuration data includes a set of first indicia corresponding to the control variables and a set of second indicia corresponding to the discrete elements (20-54, 62-74) that are actually interfaced with the programmable control unit (56,58,60), each of said second indicia being linked to a respective first indicia, and wherein said step of accessing configuration data comprises the steps of:
using a first indicia to identify a linked second indicia corresponding to a particular discrete element (20-54, 62-74) when communication is initiated by the programmable control unit (56, 58, 60); and
using a second indicia corresponding to a particular discrete element (20-54, 62-74) so as to identify a linked first indicia corresponding to a particular control variable when communication is initiated by the particular discrete element (20-54, 62-74).

4. The method of claim 1, 2 or 3, further comprising the steps of:
transferring information from at least one storage location associated with a first indicia to at least one storage location associated with a second indicia when communication is initiated by the programmable control unit (56, 58, 60); and
transferring information from at least one storage location associated with a second indicia to a storage location associated with a first indicia when communication is initiated by a discrete element (20-54, 62-74).

5. The method of any preceding claim, further comprising the steps of:
calculating a value for at least one control variable ;
noting when the calculation for the control variable is complete;
accessing the configuration data to identify the particular discrete element (20-54, 62-74) to which the updated calculated value is to be transferred; and
transferring the calculated value from a storage location associated with the control variable to a storage location associated with the identified discrete element (20-54, 62-74).

6. The method of any preceding claim, further comprising the steps of:
interrupting the programmable control unit (56,58,60) when a communication is received from a discrete element (20-54, 62-74);
accessing the configuration data to identify the particular control variable that is to receive the communication previously received from the discrete element (20-54, 62-74); and
transferring the communication from a storage location associated with the discrete element (20-54, 62-74) to a storage location associated with the particular control variable.

7. A programmable control unit (56,58,60) for a set of discrete elements (20-54. 62-74) within a heating or cooling system, said programmable control unit (56,58,60) characterised by:
a control program stored in memory for controlling the heating or cooling to be performed by the system, the control program having a set of control variables;
configuration data stored in memory for defining relationships between the set of control variables in the control program and the discrete elements (20-54, 62-74) of the heating or cooling system; and
a configuration program stored in memory which accesses the configuration data when communication is to occur between the programmable control unit (56,58,60) and the discrete elements (20-54, 62-74) of the heating or cooling system.

8. A system having a plurality of individual heating or cooling units (10,12,14) each having a programmable control unit (56,58,60) of claim 7 interfacing with a set of discrete elements (20-54, 62-74) that implement the prescribed heating or cooling for the individual heating or cooling unit (56,58,60).

9. The system or control unit of claim 7 or 8, wherein the stored configuration data comprises:
a set of first indicia corresponding to the control variables in the control program, and
a set of second indicia corresponding to discrete elements (20-54, 62-74) interfaced with a or the control unit (56,58,60), each of said second indicia being linked to a respective first indicia.

10. The system or control unit (56,58,60) of claim 9, wherein said set of second indicia furthermore include specially coded indicia indicating the lack of presence of certain discrete elements (20-54, 62-74) from interface with the or a control unit (56,58,60).

11. The system or control unit (56,58,60) of any of claims 7 to 10, wherein the configuration program comprises:
an instruction for noting when the control program has completed the updating of any calculated values for any control variables;
an instruction for accessing the configuration data to identify the particular discrete elements (20-54, 62-74) to which the updated calculated values are to be transferred; and
an instruction for transferring the updated values from storage locations associated with the control elements to storage locations associated with the identified discrete elements (20-54, 62-74).

12. The system or control unit (56,58,60) of any of claims 7 to 11, wherein the configuration program comprises:
an instruction for interrupting the control program when a communication is received from a discrete element (20-54, 62-74);
an instruction for accessing the configuration data to identify the particular control variable that is to receive the communication previously received from the discrete element (20-54, 62-74); and
an instruction for transferring the communication from a storage location associated with the discrete element (20-54, 62-74) to a storage location associated with the particular control variable.

13. The method of claim 1 further comprising the steps of:
computing values for the discrete elements (20-54, 62-74) that are to receive communications;
storing the computed values in a series of first storage locations in a memory associated with the programmable computing unit (56,58,60);
identifying communication channels associated with the discrete elements (20-54, 62-74) that are to receive the computed values; and
transferring the computed values from the first storage locations to a series of second storage locations in the memory associated with the programmable computing unit (56,58,60) whereby the stored values at the second storage locations are available for communication to the discrete elements (20-54, 62-74).

14. The method of claim 13, further comprising the steps of:
receiving values from certain discrete elements (20-54, 62-74) transmitting information to the programmable computing unit (56,58,60);
storing the received values in the series of second storage locations based upon the identification of the communication channels transmitting the information to the programmable computing unit (56,58,60);
transferring the values previously received and stored in the second storage locations to the series of first storage locations for subsequent use by the programmable computing unit (56,58,60).

15. The method of claim 14, wherein said step of storing computed values in a series of first storage locations comprises the steps of:
identifying indicia reserved for control variables within a control program executing in the programmable control unit (56,58,60); and
storing the computed values in the first storage locations for access in accordance with the indicia reserved for the control variables.

16. The method of claim 14 or 15, wherein said step of transferring the values previously received and stored in the second storage locations to the series of first storage locations comprises the step of:
identifying indicia reserved for control variables within the control program executing in the programmable control unit; and
transferring each received value to a first storage location associated with the identified indicia reserved for the control variable that is to ultimately receive the value from the discrete element (20-54, 62-74) transmitting information to the programmable control unit (56,58,60).

17. The method of any of claims 13 to 16, wherein said step of storing the computed values in a series of first storage locations comprises the steps of:
identifying indicia reserved for control variables within a control program executing in the programmable control unit (56,58,60); and
storing each computed value in a first storage location for access in accordance with the indicia reserved for the corresponding control variable for which the value was computed.

18. The method of any of claims 13 to 17, wherein said step of transferring the computed values from the first storage locations to the series of second storage locations comprises the step of:
transferring each computed value to one of said second storage locations based upon an identification of the communication channel for the discrete element (20-54, 62-74) that is to be in communication with the programmable computing unit (56,58,60) concerning the computed value.

19. The method of claim 18, wherein said step of transferring each computed value to one of said second storage locations based upon an identification of the communication channel for the discrete element (20-54, 62-74) that is to be in communication with the programmable unit (56,58,60) concerning the computed value comprises the steps of:
accessing an identification of the communication channel stored in association with the control variable for which the value was computed; and
identifying the correct second storage location based upon the accessed identification of the communication channel stored in association with the control variable (20-54, 62-74) for which the value was computed.

## Patentansprüche

1. Verfahren zum Steuern eines Heiz- oder Kühlsystems, aufweisend eine programmierbare Steuereinheit (56, 58, 60), die mit einem Satz diskreter Elemente (20-54, 62-74), die den vorbestimmten Heiz- oder Kühlvorgang für das System ausführen, eine Schnittstelle bildet,
**dadurch gekennzeichnet, daß**
die programmierbare Steuereinheit (56, 58, 60) die Schritte ausführt:
Steuern des von dem Heiz- oder Kühlsystem auszuführenden Heiz- oder Kühlvorgangs mittels eines Satzes von Steuervariablen entsprechend einer bestimmten Anzahl von diskreten Elementen (20-54, 62-74);
Zugreifen auf Konfigurationsdaten, die die Beziehungen zwischen dem Satz von Steuervariablen und den diskreten Elementen (20-54, 62-74) des Heiz- oder Kühlsystems definieren, wenn eine Übertragung zwischen der programmierbaren Steuereinheit (56, 58, 60) und den diskreten Elementen (20-54, 62-74) des Heiz- oder Kühlsystems stattfinden soll.

2. Verfahren zum Steuern eines Systems mit mehreren einzelnen Heiz- oder Kühleinheiten (10, 12, 14), bei dem jede mit dem Verfahren nach Anspruch 1 gesteuert wird.

3. Verfahren nach Anspruch 1 oder 2, bei dem die Konfigurationsdaten entsprechend den Steuervariablen einen Satz erste Indexziffern und entsprechend den tatsächlich mit der programmierbaren Steuereinheit (56, 58, 60) in Verbindung stehenden diskreten Elementen (20-54, 62-74) einen zweiten Satz Indexziffern umfassen, wobei jede der zweiten Indexziffern mit einer jeweiligen ersten Indexziffer verknüpft ist, und bei dem der Schritt des Zugreifens auf die Konfigurationsdaten die Schritte aufweist:
Verwenden einer ersten Indexziffer zum Identifizieren einer verknüpften zweiten Indexziffer entsprechend einem speziellen diskreten Element (20-54, 62-74), wenn von der programmierbaren Steuereinheit (56, 58, 60) eine Übertragung initiiert wird; und
Verwenden einer zweiten Indexziffer entsprechend einem speziellen diskreten Element (20-54, 62-74) zum Identifizieren einer verknüpften ersten Indexziffer entsprechend einer speziellen Steuervariablen, wenn von dem speziellen diskreten Element (20-54, 62-74) eine Übertragung initiiert wird.

4. Verfahren nach Anspruch 1, 2 oder 3, weiterhin aufweisend die Schritte:
Übermitteln von Information von wenigstens einer einer ersten Indexziffer zugeordneten Speicherstelle zu wenigstens einer einer zweiten Indexziffer zugeordneten Speicherstelle, wenn von der programmierbaren Steuereinheit (56, 58, 60) eine Übertragung initiiert wird; und
Übermitteln von Information von wenigstens einer einer zweiten Indexziffer zugeordneten Speicherstelle zu einer einer ersten Indexziffer zugeordneten Speicherstelle, wenn von einem diskreten Element (20-54, 62-74) eine Übertragung initiiert wird.

5. Verfahren nach einen der vorhergehenden Ansprüche, weiterhin aufweisend die Schritte:
Berechnen eines Wertes für wenigstens eine Steuervariable;
Feststellen, wenn das Berechnen der Steuervariablen beendet ist;
Zugreifen auf die Konfigurationsdaten zum Identifizieren des speziellen diskreten Elements (20-54, 62-74), an das der aktualisierte berechnete Wert übermittelt werden soll; und
Übermitteln des berechneten Wertes von einer der Steuervariablen zugeordneten Speicherstelle zu einer dem identifizierten diskreten Element (20-54, 62-74) zugeordneten Speicherstelle.

6. Verfahren nach einen der vorhergehenden Ansprüche, weiterhin aufweisend die Schritte:
Unterbrechen der programmierbaren Steuereinheit (56, 58, 60), wenn eine Übertragung von einem diskreten Element (20-54, 62-74) empfangen wird;
Zugreifen auf die Konfigurationsdaten zum Identifizieren der speziellen Steuervariable, die die vorher von dem diskreten Element (20-54, 62-74) empfangene Übertragung empfangen soll;
Übermitteln der Übertragung von einer dem diskreten Element (20-54, 62-74) zugeordneten Speicherstelle an eine der speziellen Steuervariablen zugeordneten Speicherstelle.

7. Programmierbare Steuereinheit (56, 58, 60) für einen Satz diskreter Elemente (20-54, 62-74) in einem Heiz- oder Kühlsystem, wobei die programmierbare Steuereinheit (56, 58, 60) gekennzeichnet ist durch:
ein Steuerprogramm, das in einem Speicher zum Steuern des von dem System auszuführenden Heiz- oder Kühlvorgangs gespeichert ist, wobei das Steuerprogramm einen Satz Steuervariable hat;
Konfigurationsdaten, die in einem Speicher zum Definieren der Beziehungen zwischen dem Satz Steuervariablen des Steuerprogramms und den diskreten Elementen (20-54, 62-74) des Heiz- oder Kühlsystems gespeichert sind; und
ein Konfigurationsprogramm, das in einem Speicher gespeichert ist, und auf die Konfigurationsdaten zugreift, wenn zwischen der programmierbaren Steuereinheit (56, 58, 60) und den diskreten Elementen (20-54, 62-74) des Heiz- oder Kühlsystems eine Übertragung stattfinden soll.

8. System mit mehreren einzelnen Heiz- oder Kühleinheiten (10, 12, 14) mit jeweils einer programmierbaren Steuereinheit (56, 58, 60) nach Anspruch 7, die mit einem Satz diskreter Elemente (20-54, 62-74), die das vorbestimmte Heizen oder Kühlen der einzelnen Heiz- oder Kühleinheit (56, 58, 60) ausführen, eine Schnittstelle bildet.

9. System oder Steuereinheit nach Anspruch 7 oder 8, wobei die gespeicherten Konfigurationsdaten aufweisen:
einen Satz erster Indexziffern entsprechend den Steuervariablen des Steuerprogramms, und
einen zweiten Satz Indexziffern entsprechend den diskreten Elementen (20-54, 62-74), die mit einer oder der Steuereinheit (56, 58, 60) eine Schnittstelle bilden, wobei jede der zweiten Indexziffern mit einer jeweiligen ersten Indexziffer verknüpft ist.

10. System oder Steuereinheit (56, 58, 60) nach Anspruch 9, bei dem bzw. bei der der zweite Satz Indexziffern darüber hinaus speziell kodierte Indexziffern hat, die das Fehlen von bestimmten diskreten Elementen (20-54, 62-74) an der Schnittstelle mit der oder einer Steuereinheit (56, 58, 60) anzeigen.

11. System oder Steuereinheit (56, 58, 60) nach einen der Ansprüche 7 bis 10, bei dem das Konfigurationsprogramm aufweist:
einen Befehl zum Feststellen, wenn das Steuerprogramm das Aktualisieren von irgendwelchen berechneten Werten für irgendwelche Steuervariablen beendet hat;
einen Befehl zum Zugreifen auf die Konfigurationsdaten zum Identifizieren der speziellen diskreten Elemente (20-54, 62-74), an die die aktualisierten berechneten Werte übermittelt werden sollen; und
einen Befehl zum Übermitteln der aktualisierten Werte von den den Steuervariablen zugeordneten Speicherstellen an die den identifizierten diskreten Elementen (20-54, 62-74) zugeordneten Speicherstellen.

12. System oder Steuereinheit (56, 58, 60) nach einen der Ansprüche 7 bis 11, bei dem bzw. bei der das Konfigurationsprogramm aufweist:
einen Befehl zum Unterbrechen des Steuerprogramms, wenn eine Übertragung von einem diskreten Element (20-54, 62-74) empfangen wird;
einen Befehl zum Zugreifen auf die Konfigurationsdaten zum Identifizieren der speziellen Steuervariable, die die vorher von einem diskreten Element (20-54, 62-74) empfange Übertragung empfangen soll; und
einen Befehl zum Übermitteln der Übertragung von einer dem diskreten Element (20-54, 62-74) zugeordneten Speicherstelle an eine der speziellen Steuervariablen zugeordneten Speicherstelle.

13. Verfahren nach Anspruch 1, weiterhin aufweisend die Schritte:
Berechnen von Werten für die diskreten Elemente (20-54- 62-74), die Übertragungen empfangen sollen;
Speichern der berechneten Werte in einer Reihe von ersten Speicherstellen eines der programmierbaren Steuereinheit (56, 58, 60) zugeordneten Speichers;
Identifizieren der den diskreten Elementen (20-54, 62-74), die die berechneten Werte empfangen sollen, zugeordneten Übertragungskanäle; und
Übermitteln der berechneten Werte von den ersten Speicherstellen zu einer Reihe von zweiten Speicherstellen des der programmierbaren Steuereinheit (56, 58, 60) zugeordneten Speichers, wodurch die gespeicherten Werte an den zweiten Speicherstellen für die Übertragung an die diskreten Elemente (20-54, 62-74) zur Verfügung stehen.

14. Verfahren nach Anspruch 13, weiterhin aufweisend die Schritte:
Empfangen von Werten von bestimmten diskreten Elementen (20-54, 62-74), die Information an die programmierbare Steuereinheit (56, 58, 60) übermitteln;
Speichern der empfangenen Werte in einer Reihe von zweiten Speicherstellen, basierend auf der Identifizierung der Übertragungskanäle, die die Information an die programmierbare Steuereinheit (56, 58, 60) übermitteln;
Übermitteln der vorher empfangenen und in den zweiten Speicherstellen gespeicherten Werte an die Reihe von ersten Speicherstellen zur anschließenden Verwendung durch die programmierbare Steuereinheit (56, 58, 60):

15. Verfahren nach Anspruch 14, bei dem der Schritt des Speicherns der berechneten Werte in einer Reihe erster Speicherstellen die Schritte aufweist:
Identifizieren der für die Steuervariablen eines in einer programmierbaren Steuereinheit (56, 58, 60) ablaufenden Steuerprogramms reservierten Indexziffern; und
Speichern der berechneten Werte in den ersten Speicherstellen für den Zugriff gemäß den für die Steuervariablen reservierten Indexziffern.

16. Verfahren nach Anspruch 14 oder 15, bei dem der Schritt des Übermittelns der vorher empfangenen und in den zweiten Speicherstellen gespeicherten Werte an die Reihe von ersten Speicherstellen die Schritte aufweist:
Identifizieren der für die Steuervariablen eines in einer programmierbaren Steuereinheit ablaufenden Steuerprogramms reservierten Indexziffern; und
Übermitteln eines jeden empfangenen Wertes an eine erste Speicherstelle, die den für die Steuervariable reservierten identifizierten Indexziffern zugeordnet ist, wobei die Steuervariable schließlich den Wert von dem diskreten Element (20-54, 62-74), das die Information an die progrmmierbare Steuereinheit (56, 58, 60) übermittelt, empfängt.

17. Verfahren nach einen der Ansprüche 13 bis 16, bei dem der Schritt des Speicherns der berechneten Werte in eine Reihe erster Speicherstellen die Schritte aufweist:
Identifizieren der für die Steuervariablen eines in einer programmierbaren Steuereinheit (56, 58, 60) ablaufenden Steuerprogramms reservierten Indexziffern; und
Speichern eines jeden ermittelten Wertes in einer ersten Speicherstelle für den Zugriff gemäß den für die entsprechende Steuervariable, für die der Wert berechnet wurde, reservierten Indexziffern.

18. Verfahren nach einen der Ansprüche 13 bis 17, bei dem der Schritt des Übermittelns der berechneten Werte von den ersten Speicherstellen an die Reihe von zweiten Speicherstellen den Schritt aufweist:
Übermitteln eines jeden berechneten Wertes an eine der zweiten Speicherstellen, basierend auf einer Identifizierung des Übertragungskanals für das diskrete Element (20 - 54, 62 - 74), das bezüglich des berechneten Wertes mit der programmierbaren Steuereinheit (56, 58, 60) in Verbindung stehen soll.

19. Verfahren nach Anspruch 18, bei dem der Schritt des Übermittelns eines jeden berechneten Wertes an eine der zweiten Speicherstellen, basierend auf einer Identifizierung des Übertragungskanals für das diskrete Element (20-54, 62-74), das bezüglich des ermittelten Wertes mit der programmierbaren Steuereinheit (56, 58, 60) in Verbindung stehen soll, die Schritte aufweist:
Zugreifen auf eine Identifizierung des Übertragungskanals, die in Zuordnung zu der Steuervariablen berechnet ist, für die der Wert berechnet wurde; und
Identifizieren der richtigen zweiten Speicherstelle, basierend auf das Zugreifen auf die in Zuordnung zu der Steuervariablen (20-54, 62-74), für die der Wert berechnet wurde, gespeicherten Identifizierung des Übertragungskanals.

## Revendications

1. Procédé pour commander un système de chauffage ou de refroidissement comportant une unité de commande programmable (56, 58, 60) réalisant l'interface avec un ensemble d'éléments discrets (20 à 54, 62 à 74) qui mettent en oeuvre le chauffage ou le refroidissement prescrit pour le système, caractérisé en ce que l'unité de commande programmable (56, 58, 60) exécute les étapes consistant à :
commander le chauffage ou le refroidissement devant être effectué par le système de chauffage ou de refroidissement par un ensemble de variables de commande correspondant à un ensemble donné d'éléments discrets (20 à 54, 62 à 74) ;
accéder aux données de configuration définissant les relations qui existent entre l'ensemble de variables de commande et les éléments discrets (20 à 54, 62 à 74) du système de chauffage ou de refroidissement lorsqu'une communication doit survenir entre l'unité de commande programmable (56, 58, 60) et les éléments discrets (20 à 54, 62 à 74) du système de chauffage ou de refroidissement.

2. Procédé de commande d'un système comportant une pluralité d'unités de chauffage ou de refroidissement individuelles (10, 12, 14) contrôlées chacune par le procédé de la revendication 1.

3. Procédé selon la revendication 1 ou 2, dans lequel les données de configuration comprennent un ensemble de premiers indices correspondant aux variables de commande et un ensemble de seconds indices correspondant aux éléments discrets (20 à 54, 62 à 74) qui sont réellement interfacés avec l'unité de commande programmable (56, 58, 60), chacun desdits seconds indices étant lié à un premier indice respectif, et dans lequel ladite étape d'accès aux données de configuration comprend les étapes consistant à :
utiliser un premier indice afin d'identifier un second indice lié correspondant à un élément discret particulier (20 à 54, 62 à 74) lorsqu'une communication est lancée par l'unité de commande programmable (56, 58, 60) ; et
utiliser un second indice correspondant à un élément discret particulier (20 à 54, 62 à 74) de manière à identifier un premier indice lié correspondant à une variable de commande particulière lorsqu'une communication est lancée par l'élément discret particulier (20 à 54, 62 à 74).

4. Procédé selon la revendication 1, 2 ou 3, comprenant, de plus, les étapes consistant à :
transférer des informations d'au moins un premier emplacement de mémorisation associé à un premier indice vers au moins un emplacement de mémorisation associé à un second indice lorsqu'une communication est lancée par l'unité de commande programmable (56, 58, 60) ; et
transférer des informations d'au moins un premier emplacement de mémorisation associé à un second indice vers un emplacement de mémorisation associé à un premier indice lorsqu'une communication est lancée par un élément discret (20 à 54, 62 à 74).

5. Procédé selon l'une quelconque des revendications précédentes, comprenant, de plus, les étapes consistant à :
calculer une valeur pour au moins une variable de commande ;
noter quand le calcul de la variable de commande est achevé ;
accéder aux données de configuration afin d'identifier l'élément discret particulier (20 à 54, 62 à 74) auquel la valeur calculée mise à jour doit être transférée ; et
transférer la valeur calculée d'un emplacement de mémorisation associé à la variable de commande vers un emplacement de mémorisation associé à l'élément discret identifié (20 à 54, 62 à 74).

6. Procédé selon l'une quelconque des revendications précédentes, comprenant, de plus, les étapes consistant à :
interrompre l'unité de commande programmable (56, 58, 60) lorsqu'une communication est reçue d'un élément discret (20 à 54, 62 à 74) ;
accéder aux données de configuration afin d'identifier la variable de commande particulière qui doit recevoir la communication précédemment reçue de l'élément discret (20 à 54, 62 à 74) ; et
transférer la communication d'un emplacement de mémorisation associé à l'élément discret (20 à 54, 62 à 74) vers un emplacement de mémorisation associé à la variable de commande particulière.

7. Unité de commande programmable (56, 58, 60) pour un ensemble d'éléments discrets (20 à 54, 62 à 74) dans un système de chauffage ou de refroidissement, ladite unité de commande programmable (56, 58, 60) étant caractérisée par :
un programme de commande mis en mémoire pour commander le chauffage ou le refroidissement que le système doit effectuer, le programme de commande comportant un ensemble de variables de commande ;
des données de configuration mises en mémoire afin de définir des relations entre l'ensemble de variables de commande dans le programme de commande et les éléments discrets (20 à 54, 62 à 74) du système de chauffage ou de refroidissement ; et
un programme de configuration mis en mémoire qui accède aux données de configuration lorsqu'une communication doit survenir entre l'unité de commande programmable (56, 58, 60) et les éléments discrets (20 à 54, 62 à 74) du système de chauffage ou de refroidissement.

8. Système comportant une pluralité d'unités de chauffage ou de refroidissement individuelles (10, 12, 14) comportant chacune une unité de commande programmable (56, 58, 60) de la revendication 7 réalisant l'interface avec un ensemble d'éléments discrets (20 à 54, 62 à 74) qui mettent en oeuvre le chauffage ou le refroidissement prescrit pour l'unité de chauffage ou de refroidissement individuelle (56, 58, 60).

9. Système ou unité de commande selon la revendication 7 ou 8, dans lequel les données de configuration mémorisées comprennent :
un ensemble de premiers indices correspondant aux variables de commande dans le programme de commande, et
un ensemble de seconds indices correspondant aux éléments discrets (20 à 54, 62 à 74) interfacés avec une ou l'unité de commande (56, 58, 60), chacun desdits seconds indices étant lié à un premier indice respectif.

10. Système ou unité de commande (56, 58, 60) selon la revendication 9, dans lequel ledit ensemble de seconds indices comprend, de plus, des indices codés de manière spéciale indiquant l'absence de certains éléments discrets (20 à 54, 62 à 74) de l'interface avec une ou l'unité de commande (56, 58, 60).

11. Système ou unité de commande (56, 58, 60) selon l'une quelconque des revendications 7 à 10, dans lequel le programme de configuration comprend :
une instruction pour noter le moment auquel le programme de commande a achevé la mise à jour de toutes les valeurs calculées pour toutes les variables de commande ;
une instruction pour accéder aux données de configuration afin d'identifier les éléments discrets particuliers (20 à 54, 62 à 74) vers lesquels les valeurs calculées mises à jour doivent être transférées ; et
une instruction pour transférer les valeurs mises à jour des emplacements de mémorisation associés aux éléments de commande vers les emplacements de mémorisation associés aux éléments discrets identifiés (20 à 54, 62 à 74).

12. Système ou unité de commande (56, 58, 60) selon l'une quelconque des revendications 7 à 11, dans lequel le programme de configuration comprend :
une instruction pour interrompre le programme de commande lorsqu'une communication est reçue d'un élément discret (20 à 54, 62 à 74) ;
une instruction pour accéder aux données de configuration afin d'identifier la variable de commande particulière qui doit recevoir la communication reçue précédemment de l'élément discret (20 à 54, 62 à 74); et
une instruction pour transférer la communication d'un emplacement de mémorisation associé à l'élément discret (20 à 54, 62 à 74) vers un emplacement de mémorisation associé à la variable de commande particulière.

13. Procédé selon la revendication 1, comprenant, de plus, les étapes consistant à :
calculer des valeurs pour les éléments discrets (20 à 54, 62 à 74) qui doivent recevoir des communications ;
mémoriser les valeurs calculées dans une série de premiers emplacements de mémorisation dans une mémoire associée à l'unité de calcul programmable (56, 58, 60) ;
identifier les canaux de communication associés aux éléments discrets (20 à 54, 62 à 74) qui doivent recevoir les valeurs calculées ; et
transférer les valeurs calculées des premiers emplacements de mémorisation vers une série de seconds emplacements de mémorisation dans la mémoire associée à l'unité de calcul programmable (56, 58, 60) de telle manière que les valeurs mémorisées aux seconds emplacements de mémorisation soient disponibles pour une communication vers les éléments discrets (20 à 54, 62 à 74).

14. Procédé selon la revendication 13, comprenant, de plus, les étapes consistant à :
recevoir des valeurs de certains éléments discrets (20 à 54, 62 à 74) transmettant des informations à l'unité de calcul programmable (56, 58, 60) ;
mémoriser les valeurs reçues dans la série de seconds emplacements de mémorisation sur la base de l'identification des canaux de communication transmettant les informations à l'unité de calcul programmable (56, 58, 60) ;
transférer les valeurs précédemment reçues et mémorisées dans les seconds emplacements de mémorisation vers la série de premiers emplacements de mémorisation pour une utilisation ultérieure par l'unité de calcul programmable (56, 58, 60).

15. Procédé selon la revendication 14, dans lequel ladite étape de mémorisation des valeurs calculées dans une série de premiers emplacements de mémorisation comprend les étapes consistant à :
identifier les indices réservés aux variables de commande dans un programme de commande s'exécutant dans l'unité de commande programmable (56, 58, 60) ; et
mémoriser les valeurs calculées dans les premiers emplacements de mémorisation en vue d'un accès conformément aux indices réservés aux variables de commande.

16. Procédé selon la revendication 14 ou 15, dans lequel ladite étape de transfert des valeurs précédemment reçues et mémorisées aux seconds emplacements de mémorisation vers la série de premiers emplacements de mémorisation, comprend les étapes consistant à :
identifier les indices réservés aux variables de commande dans le programme de commande s'exécutant dans l'unité de commande programmable ; et
transférer chaque valeur reçue vers un premier emplacement de mémorisation associé à l'indice identifié réservé à la variable de commande qui doit recevoir en définitive la valeur provenant de l'élément discret (20 à 54, 62 à 74) transmettant des informations à l'unité de commande programmable (56, 58, 60).

17. Procédé selon l'une quelconque des revendications 13 à 16, dans lequel ladite étape de mémorisation des valeurs calculées dans une série de premiers emplacements de mémorisation comprend les étapes consistant à :
identifier les indices réservés aux variables de commande dans un programme de commande s'exécutant dans l'unité de commande programmable (56, 58, 60) ; et
mémoriser chaque valeur calculée dans un premier emplacement de mémorisation en vue d'un accès conformément à l'indice réservé à la variable de commande correspondante pour laquelle la valeur a été calculée.

18. Procédé selon l'une quelconque des revendications 13 à 17, dans lequel ladite étape de transfert des valeurs calculées à partir des premiers emplacements de mémorisation vers la série de seconds emplacements de mémorisation comprend l'étape consistant à :
transférer chaque valeur calculée vers l'un desdits seconds emplacements de mémorisation sur la base d'une identification du canal de communication pour l'élément discret (20 à 54, 62 à 74) qui doit être en communication avec l'unité de calcul programmable (56, 58, 60) concernant la valeur calculée.

19. Procédé selon la revendication 18, dans lequel ladite étape de transfert de chaque valeur calculée vers l'un desdits seconds emplacements de mémorisation sur la base d'une identification du canal de communication pour l'élément discret (20 à 54, 62 à 74) qui doit être en communication avec l'unité programmable (56, 58, 60) concernant la valeur calculée, comprend les étapes consistant à :
accéder à une identification du canal de communication mémorisée en association avec la variable de commande pour laquelle la valeur a été calculée ; et
identifier le second emplacement de mémorisation correct sur la base de l'identification accédée du canal de communication mémorisée en association avec la variable de commande (20 à 54, 62 à 74) pour laquelle la valeur a été calculée.
